# EUROPEAN PATENT APPLICATION

(11) **EP 4 397 887 A1**
(43) Date of publication of application: **10.07.2024**
(21) Application number: 22907328.3
(22) Date of filing: 07.12.2022
(51) Int. Cl.: F16H 57/04, F16C 33/58, F16C 33/66, F16C 35/067

(54) **DRIVE DEVICE**

(30) Priority: 15.12.2021 JP 2021203764
(71) Applicant: AISIN CORPORATION, Kariya-shi, Aichi 448-8650 (JP)
(72) Inventor: YAMASAKI, Shoichi, Kariya-shi, Aichi 448-8650 (JP); YAMAMOTO, Akira, Kariya-shi, Aichi 448-8650 (JP)
(74) Representative: Kramer Barske Schmidtchen Patentanwälte PartG mbB
(86) International application number: PCT/JP2022/045184
(87) International publication number: WO 2023/112801

(57) **Abstract**

Disclosed is a drive device including a stationary member, a bearing, and a rotary member drivingly connected to a driving source and supported by the stationary member via the bearing so as to be rotatable about an axis. The rotary member is press-fitted to the bearing and the bearing is fitted to the stationary member. One or more grooves through which oil passes are formed on a surface of the bearing that faces the stationary member in a radial direction or on a surface of the stationary member that faces the bearing in the radial direction. The groove extends in an axial direction and in a circumferential direction about the axis, and is open on at least one side out of both sides of the bearing in the axial direction.

## Description

### TECHNICAL FIELD

The present disclosure relates to a drive device.

### BACKGROUND ART

There is known a lubrication circuit in which oil stored in a case is pumped up by an oil pump and the pumped oil is supplied to a power transmission mechanism to lubricate the power transmission mechanism (including bearings).

### Related Art Documents

### Patent Documents

Patent Document 1: Japanese Unexamined Patent Application Publication No. 2019-129608 (JP 2019-129608 A)

### SUMMARY OF THE INVENTION

### Problem to be Solved by the Invention

However, the above related art does not have a mechanism for appropriately supplying oil from the oil pump to the surface of a bearing that faces the case in a radial direction and on which the bearing can slide relative to the case (e.g., in a case of clearance fit, a surface on a clearance fit side). Therefore, when creeping in which the bearing rotates relative to the case has occurred and the bearing comes into contact with the case, a relatively high radial load is applied to the case and the case may be worn.

In one aspect, the present disclosure has an object to reduce the wear of a case due to creeping by providing a mechanism for appropriately supplying oil from an oil pump to the surface of a bearing.

### Means for Solving the Problem

One aspect provides a drive device including a stationary member, a bearing, and a rotary member drivingly connected to a driving source and supported by the stationary member via the bearing so as to be rotatable about an axis. The rotary member is press-fitted to the bearing and the bearing is fitted to the stationary member. One or more grooves through which oil passes are formed on a surface of the bearing that faces the stationary member in a radial direction or on a surface of the stationary member that faces the bearing in the radial direction. The groove extends in an axial direction and in a circumferential direction about the axis, and is open on at least one side out of both sides of the bearing in the axial direction.

### Effects of the Invention

In one aspect, according to the present disclosure, it is possible to reduce the wear of the case due to creeping by providing the mechanism for appropriately supplying oil from the oil pump to the surface of the bearing.

### BRIEF DESCRIPTION OF THE DRAWINGS

[FIG. 1] FIG. 1 is a skeleton diagram of a vehicle drive system including a rotary electric machine and a power transmission mechanism.
[FIG. 2] FIG. 2 is an explanatory diagram of a bearing structure suitable for a vehicle drive device according to the present embodiment.
[FIG. 3] FIG. 3 is an explanatory diagram of a groove formed on the outer peripheral surface of an outer race.
[FIG. 4] FIG. 4 is an explanatory diagram of variations of a round shape of the bottom of the groove.
[FIG. 5] FIG. 5 is an explanatory diagram of how oil is transported by the groove of the present embodiment.
[FIG. 6] FIG. 6 is a diagram showing states when creeping in which a bearing rotates relative to a case has occurred.
[FIG. 7] FIG. 7 is an explanatory diagram of a relationship between a torque generated in a direction in which the outer race rotates relative to the case and a torque generated in a direction in which the rotation of the outer race relative to the case is stopped.
[FIG. 8] FIG. 8 is an explanatory diagram of variation characteristics of the torques according to a comparative example.
[FIG. 9] FIG. 9 is an explanatory diagram of variation characteristics of the torques according to the present embodiment.
[FIG. 10] FIG. 10 is an explanatory diagram of preferred groove dispositions according to a first modification and a second modification.
[FIG. 11] FIG. 11 is an explanatory diagram of a groove formed on the outer peripheral surface of an outer race of a bearing according to a third modification.
[FIG. 12] FIG. 12 is an enlarged view of a portion Q2 in FIG. 11.
[FIG. 13] FIG. 13 is a sectional view taken along line Q3-Q3 in FIG. 12.
[FIG. 14] FIG. 14 is a diagram corresponding to FIG. 12 in a case of a configuration without an oil reservoir.
[FIG. 15] FIG. 15 is an explanatory diagram of a groove formed on the outer peripheral surface of an outer race of a bearing according to a fourth modification.
[FIG. 16] FIG. 16 is an explanatory diagram of a groove formed on the outer peripheral surface of an outer race of a bearing according to a fifth modification.
[FIG. 17] FIG. 17 is an explanatory diagram of a groove formed on the inner peripheral surface (surface that faces an outer race in a radial direction) of a case according to a sixth modification.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

Hereinafter, a vehicle drive system 100 to which a vehicle drive device 17 according to the present embodiment is suitably applicable will be described first, and then a bearing structure of the vehicle drive device 17 according to the present embodiment will be described.

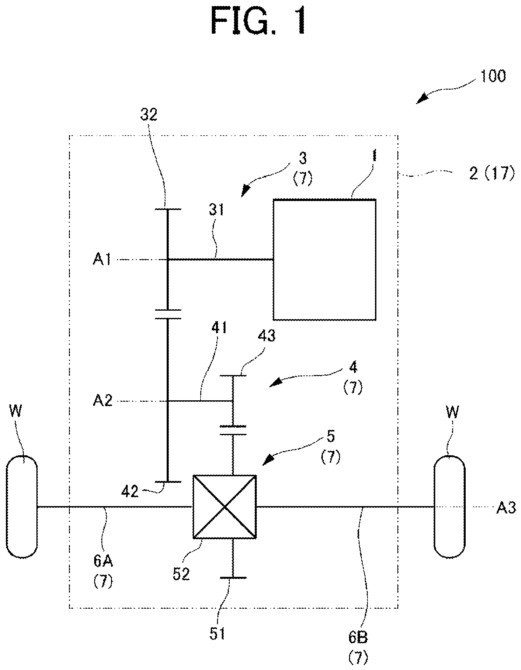

FIG. 1 is a skeleton diagram of the vehicle drive system 100 including a rotary electric machine 1 and a power transmission mechanism 7.

In the example shown in FIG. 1, the vehicle drive system 100 includes the rotary electric machine 1 serving as a driving source of the vehicle and the power transmission mechanism 7 provided in a power transmission path connecting the rotary electric machine 1 and wheels W. The power transmission mechanism 7 includes an input member 3, a counter gear mechanism 4, a differential gear mechanism 5, and left and right output members 6A, 6B.

The input member 3 includes an input shaft 31 and an input gear 32. The input shaft 31 is a rotary member that rotates about a first axis A1. The input gear 32 is a gear that transmits a rotational torque (driving force) from the rotary electric machine 1 to the counter gear mechanism 4. The input gear 32 is provided to the input shaft 31 of the input member 3 so as to rotate integrally with the input shaft 31 of the input member 3.

The counter gear mechanism 4 is disposed between the input member 3 and the differential gear mechanism 5 in the power transmission path. The counter gear mechanism 4 includes a counter shaft 41, a first counter gear 42, and a second counter gear 43.

The counter shaft 41 is a rotary member that rotates about a second axis A2. The second axis A2 extends parallel to the first axis A1. The first counter gear 42 is an input element of the counter gear mechanism 4. The first counter gear 42 meshes with the input gear 32 of the input member 3. The first counter gear 42 is connected to the counter shaft 41 so as to rotate integrally with the counter shaft 41.

The second counter gear 43 is an output element of the counter gear mechanism 4. In the present embodiment, the second counter gear 43 has, for example, a smaller diameter than the first counter gear 42. The second counter gear 43 is provided to the counter shaft 41 so as to rotate integrally with the counter shaft 41.

The differential gear mechanism 5 is disposed on a third axis A3 serving as a rotation axis of the differential gear mechanism 5. The third axis A3 extends parallel to the first axis A1. The differential gear mechanism 5 distributes the driving force transmitted from the rotary electric machine 1 side to the left and right output members 6A, 6B. The differential gear mechanism 5 includes a differential input gear 51, and the differential input gear 51 meshes with the second counter gear 43 of the counter gear mechanism 4. The differential gear mechanism 5 includes a differential case 52, and the differential case 52 houses a pinion shaft, pinion gears, left and right side gears, etc. The left and right side gears are connected to the left and right output members 6A, 6B so as to rotate integrally with the left and right output members 6A, 6B, respectively.

The left and right output members 6A, 6B are drivingly connected to the left and right wheels W, respectively. Each of the left and right output members 6A, 6B transmits the driving force distributed by the differential gear mechanism 5 to the wheel W. The left and right output members 6A, 6B may be each composed of two or more members.

The rotary electric machine 1 thus drives the wheels W via the power transmission mechanism 7. In other embodiments, other speed reducing mechanisms such as a planetary gear mechanism may be used.

In the vehicle drive system 100 shown in FIG. 1, the case 2 and various components in the case 2 constitute the vehicle drive device 17 according to the present embodiment. Part or all of either or both of the left and right output members 6A, 6B need not essentially be housed in the case 2.

The vehicle drive device 17 according to the present embodiment is applicable not only to the vehicle drive system 100 having the specific configuration shown in FIG. 1 but also to various vehicle drive systems. The vehicle drive device 17 is applicable to any vehicle drive system as long as it includes at least one rotary member drivingly connected to the wheels W so as to transmit power from the driving source (e.g., the rotary electric machine 1 or an engine) to the wheels W..

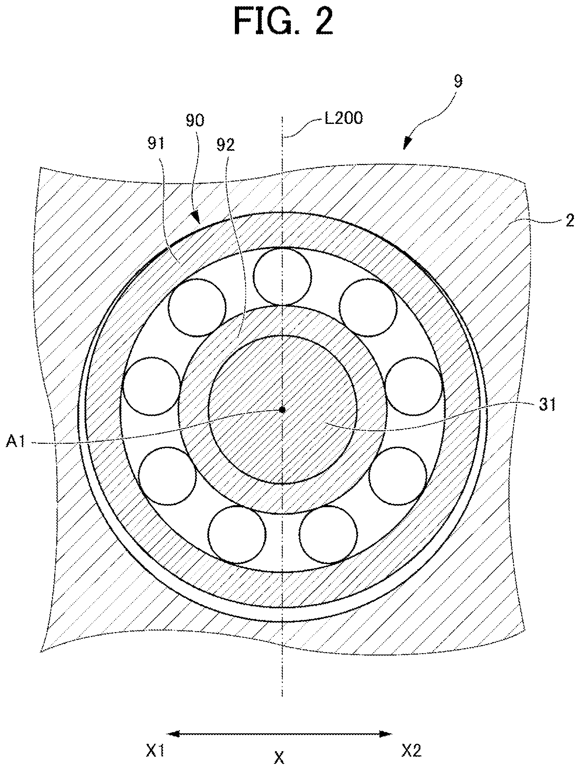

Next, a characteristic configuration of the vehicle drive device 17 according to the present embodiment will be described with reference to FIG. 2 and subsequent figures.

FIG. 2 is an explanatory diagram of a bearing structure 9 suitable for the vehicle drive device 17 according to the present embodiment, and is a schematic diagram viewed in an axial direction. In FIG. 2, an X direction is defined as a direction perpendicular to the first axis A1, and an X1 side and an X2 side are defined along the X direction. The X direction may substantially correspond to, for example, the horizontal direction.

In the following, the bearing structure 9 will be described taking an example in which it is applied to a bearing 90 that rotatably supports the input shaft 31 shown in FIG. 1, but the bearing structure 9 may also be applied to other bearings (not shown) that rotatably support other rotary members in the vehicle drive device 17.

The input shaft 31 that is a rotary member is press-fitted (tightly fitted) to the bearing 90, and the bearing 90 is fitted to the case 2 that is a stationary member with a clearance. That is, in the bearing 90, an outer race 91 is fitted to a shaft hole of the case 2 with a clearance, and the input shaft 31 is press-fitted to a radially inner side of an inner race 92. In the example shown in FIG. 2, the bearing 90 is a ball bearing, but may be another type of rolling bearing using rollers etc. Hereinafter, the surface of the bearing 90 that faces the case 2 in the radial direction will also be referred to as "outer peripheral surface of the outer race 91".

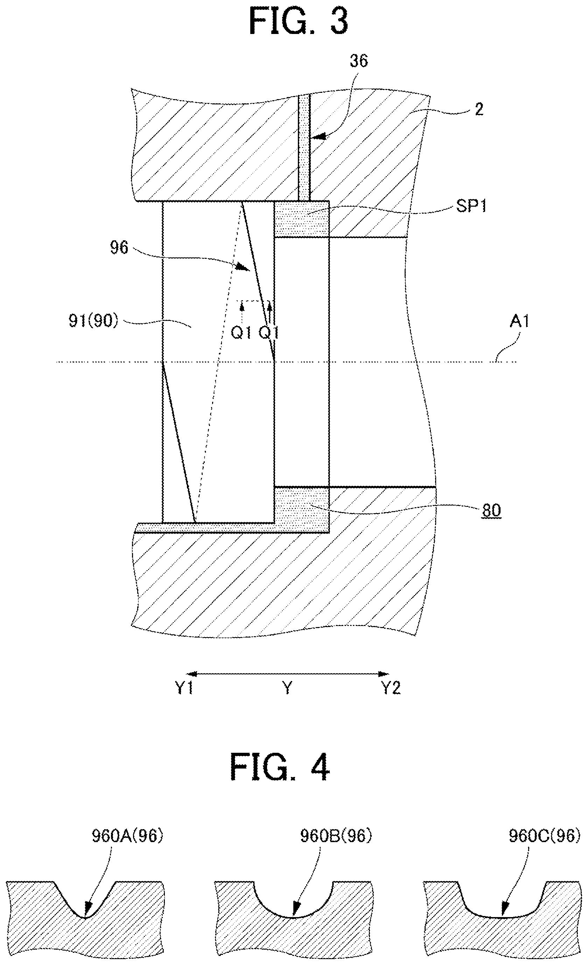

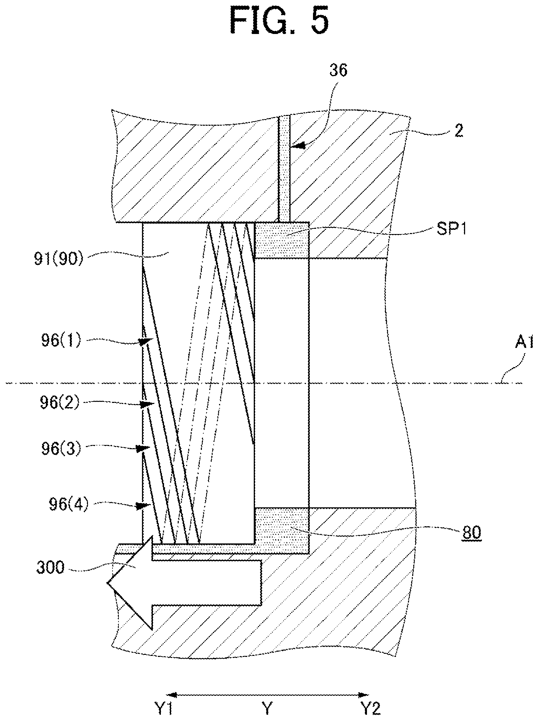

FIG. 3 is an explanatory diagram of a groove 96 formed on the outer peripheral surface of the outer race 91, and is a diagram showing the bearing 90 in a side view (viewed in the X direction from the X2 side) while part of the case 2 in FIG. 2 (on the X2 side with respect to a line L200 in FIG. 2) and the input shaft 31 are omitted. FIG. 3 schematically shows the other part of the case 2 in FIG. 2 (on the X1 side with respect to the line L200 in FIG. 2). In FIG. 3, a Y direction is defined as a direction parallel to the first axis A1, and a Y1 side and a Y2 side are defined along the Y direction. In FIG. 3 (the same applies to FIG. 5 etc. described later), oil is schematically shown as a hatched area 80. FIG. 4 is an explanatory diagram of variations of a round shape of the bottom of the groove 96, and is a sectional view taken along line Q1-Q1 in FIG. 3.

In the present embodiment, the groove 96 through which oil passes is formed on the outer peripheral surface of the outer race 91 in the bearing 90 (surface that faces the case 2 in the radial direction). The groove 96 may have a sectional shape with roundness at a bottom 960A, 960B, 960C as shown in FIG. 4. FIG. 4 schematically shows the sectional shape of the groove 96. FIG. 4 schematically shows three types of bottom 960A, 960B, 960C of the groove 96. When the bottom 960A, 960B, 960C has such roundness, stress concentration at the bottom of the groove 96 can be prevented, and the bearing 90 having the groove 96 can be downsized.

The groove 96 has a helical shape about an axis extending from one axial end of the bearing 90 to the other axial end, and is open in the axial direction at both the axial ends of the bearing 90. In FIG. 3, the groove 96 is schematically shown as a single line (dashed line on the X1 side at the back).

FIG. 5 is an explanatory diagram of how oil is transported by the groove 96 of the present embodiment, and is a diagram corresponding to FIG. 3 and illustrating a flow of oil along the groove 96.

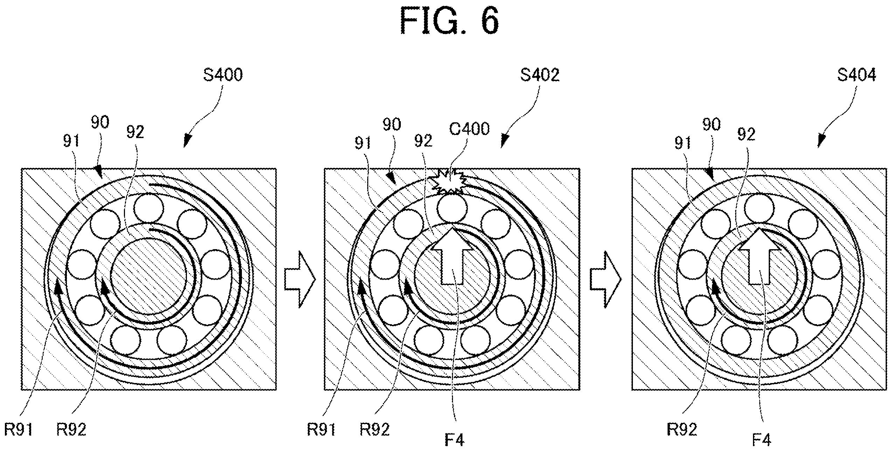

In FIG. 5, the states of the groove 96 when the outer race 91 of the bearing 90 rotates relative to the case 2 are represented by reference numerals 96(1) to 96(4). The numerals 96(1) to 96(4) correspond to positions in chronological order. When the outer race 91 of the bearing 90 rotates relative to the case 2, oil is transported from one side in the axial direction (Y2 side in FIG. 5) to the other side in the axial direction (Y1 side in FIG. 5) by the groove 96 (see arrow 300 in FIG. 5) as can be seen from changes in the groove 96 represented by 96(1) to 96(4). At this time, the helix direction of the groove 96 is set such that oil in a space SP1 on one side of the bearing 90 in the axial direction (Y2 side in FIG. 5) is sent to the other side of the bearing 90 in the axial direction (Y1 side in FIG. 5) when the input shaft 31 rotates in a rotation direction in conjunction with forward movement of the vehicle. With the axial oil flow through the groove 96, the oil can appropriately be supplied between the outer race 91 of the bearing 90 and the case 2 in the radial direction. Thus, the coefficient of friction between the outer race 91 of the bearing 90 and the case 2 can be reduced effectively. Further effects related to this will be described later with reference to FIGS. 6 to 8.

To secure an appropriate amount of oil to be supplied between the outer race 91 of the bearing 90 and the case 2 in the radial direction, it is preferable to provide an oil passage 36 through which oil is supplied to the space SP1 that is adjacent from one side in the axial direction (Y2 side in FIG. 5) with respect to the bearing 90. Thus, the oil supplied to the space SP1 can efficiently be supplied between the outer race 91 of the bearing 90 and the case 2 in the radial direction. Part or all of the oil passage 36 may be formed in the case 2 or may be formed in a tubular member separate from the case 2.

According to the present embodiment, as described above, the oil can be transported from one side of the bearing 90 (Y2 side in FIG. 5) to the other side (Y1 side in FIG. 5) by the groove 96. Thus, it is possible to eliminate an oil passage with the same function. For example, in a configuration in which a rotor shaft (not shown) of the rotary electric machine 1 is made hollow to form an axial oil passage, oil from the axial oil passage can be supplied to the power transmission mechanism 7 side (e.g., various lubrication target elements disposed in a space on the power transmission mechanism 7 side in the case 2) via the bearing 90.

Next, the effects of the oil supplied as described above between the outer race 91 of the bearing 90 and the case 2 in the radial direction by the groove 96 of the present embodiment will be described with reference to FIGS. 6 to 8.

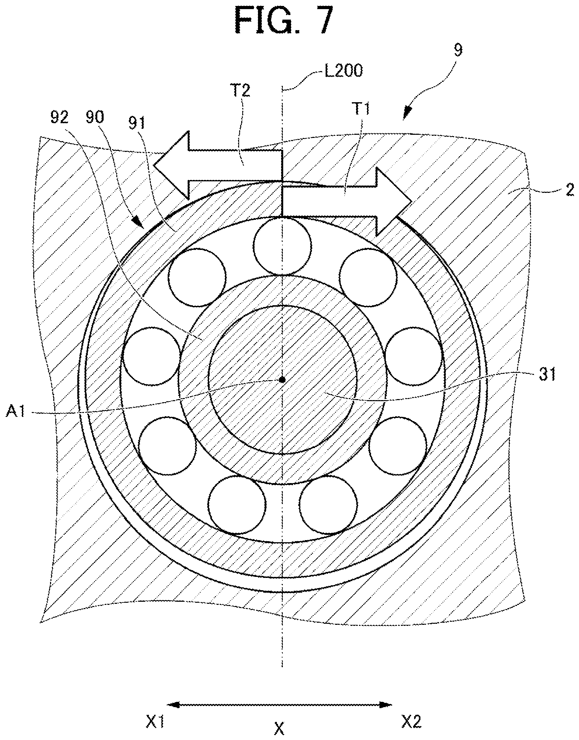

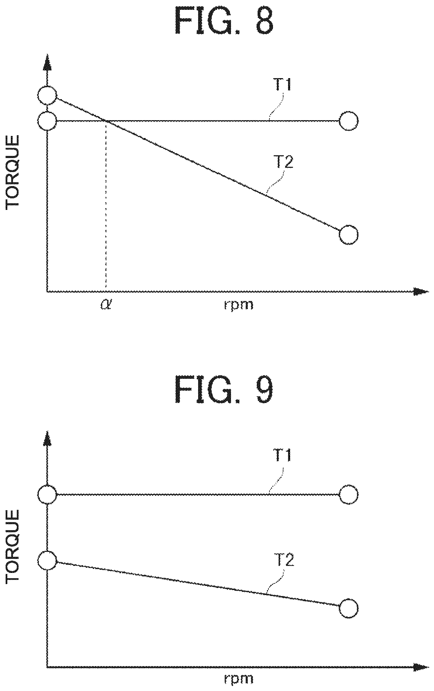

First, the main cause of wear of the case 2 will be described with reference to FIG. 6. FIG. 6 is a diagram showing states S400 to S404 when creeping in which the bearing 90 rotates relative to the case 2 has occurred. In FIG. 6, arrows R91, R92 represent a rotation state and a rotation direction. FIG. 7 is an explanatory diagram of a relationship between a torque T1 generated in a direction in which the outer race 91 rotates relative to the case 2 (rotates clockwise in this case) and a torque T2 generated in a direction in which the rotation of the outer race 91 relative to the case 2 (clockwise rotation in this case) is stopped. FIG. 8 is a characteristic diagram according to a comparative example, and FIG. 9 is a characteristic diagram according to the present embodiment. FIGS. 8 and 9 show variation characteristics of the torques T1, T2 according to the comparative example and the present embodiment with the horizontal axis representing a rotation speed of the inner race 92 of the bearing 90 and the vertical axis representing a torque. The comparative example differs from the bearing 90 of the present embodiment in that the groove 96 is not provided.

In state S400, the outer race 91 of the bearing 90 is rotating relative to the case 2, but the load is low and the rotation speed is high. Since the load applied between the case 2 and the outer race 91 is low, no significant wear occurs.

In state S402 in which the load is high (see F4) and the rotation speed is low, the relatively high load (radial load F4) is generated due to solid contact of the outer race 91 of the bearing 90 with the case 2 (see mark C400). Significant wear is likely to occur. When the outer race 91 of the bearing 90 comes into solid contact with the case 2, the rotation of the outer race 91 relative to the case 2 is stopped (see state S404), and then the state returns to state S400. When the transition from state S400 to state S404 is repeated, state S402 is repeated and the wear of the case 2 is likely to progress.

State S402 and subsequent state S404 occur when the torque T1 (see FIG. 7) is lower than the torque T2 (see FIG. 7). That is, when torque T1 > torque T2, the outer race 91 continues to rotate (i.e., so-called co-rotation creeping occurs). If the coefficient of friction contributing to the torque T2 (coefficient of friction between the case 2 and the outer race 91) can be reduced, the torque T2 can be reduced and the relationship of torque T1 > torque T2 can be achieved easily.

In this respect, unlike the bearing 90 of the present embodiment, as shown in FIG. 8, the relationship of torque T1 > torque T2 does not hold in a low rotation range (in FIG. 8, a range equal to or lower than a rotation speed α) in the comparative example without the groove 96. Therefore, state S402 and subsequent state S404 are likely to occur. Therefore, in the comparative example, state S402 is repeated and the wear of the case 2 is likely to progress.

According to the present embodiment, as described above, the oil passing through the groove 96 can reduce the coefficient of friction (coefficient of friction between the case 2 and the outer race 91) contributing to the torque T2. Therefore, the relationship of torque T1 > torque T2 is easily maintained even in the low rotation range as shown in FIG. 9. Thus, according to the present embodiment, the wear of the case 2 can effectively be reduced by maintaining the relationship of torque T1 > torque T2 with the oil passing through the groove 96.

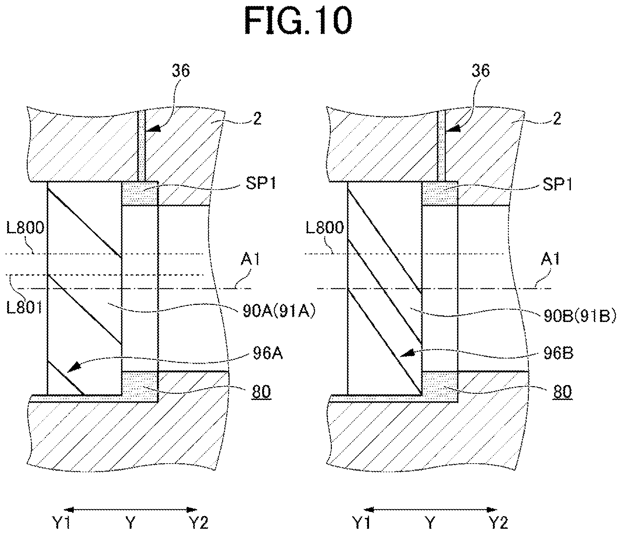

Next, modifications of the groove 96 will be described with reference to FIG. 10 and subsequent figures.

FIG. 10 is an explanatory diagram of preferred groove dispositions. FIG. 10 shows two variations (grooves 96A, 96B) as modifications of the groove 96. That is, the groove 96A is formed on the outer peripheral surface of an outer race 91A of a bearing 90A according to a first modification, and the groove 96B is formed on the outer peripheral surface of an outer race 91B of a bearing 90B according to a second modification.

Regarding both the grooves 96A, 96B, a plurality of grooves is provided unlike the groove 96 in the embodiment described above. Each of the grooves 96A, 96B has a significantly narrower circumferential extension range than the groove 96 of the embodiment described above, but similarly has a helical shape.

Similarly to the groove 96 according to the embodiment described above, the oil in the space SP1 can be sent to the other side of the bearings 90A, 90B (Y1 side in FIG. 10) through the grooves 96A, 96B during the rotation of the input shaft 31 in the rotation direction in conjunction with forward movement of the vehicle. With the axial oil flow through the grooves 96A, 96B, the oil can appropriately be supplied between the outer races 91A, 91B of the bearings 90A, 90B and the case 2 in the radial direction. Thus, the coefficient of friction between the outer races 91A, 91B of the bearings 90A, 90B and the case 2 can be reduced effectively.

The configuration in which the grooves 96B are formed at a relatively high density as in the outer race 91B of the bearing 90B can be advantageous in that the suppliable amount of oil can be increased (and the coefficient of friction can be reduced accordingly). However, the contact area between the outer race 91B and the case 2 is reduced, which is disadvantageous in that the surface pressure increases.

Therefore, it is preferable that the groove on the outer peripheral surface of the outer race be formed, like the grooves 96A of the bearing 90A, so as to intersect a virtual line parallel to the axial direction on the outer peripheral surface of the outer race one time or less at each circumferential position. FIG. 10 shows a virtual line L800 at one circumferential position. In this case, the virtual line L800 intersects the groove 96A of the bearing 90A only once, but intersects the grooves 96B of the bearing 90B twice.

The term "intersect" means cross-shaped intersection. Therefore, in a case of a virtual line L801 shown for the bearing 90A in FIG. 10 (virtual line L801 at another circumferential position), the virtual line L801 does not "intersect" the groove 96A though it is just in contact with the axial end (end on the Y1 side) of the groove 96A of the bearing 90A. In this respect, also in the case of the groove 96 according to the embodiment described above, the virtual line (not shown) in contact with one axial end of the groove 96 is in contact with the other axial end of the groove 96. Therefore, the number of times of intersection is one or less.

By appropriately disposing the groove on the outer peripheral surface of the outer race in this way, it is possible to maximize the contact area between the outer race and the case 2 while securing the necessary amount of oil supplied by the groove. By increasing the contact area between the outer race and the case 2, the surface pressure can be reduced. Therefore, the outer race can be downsized (the radial thickness can be reduced).

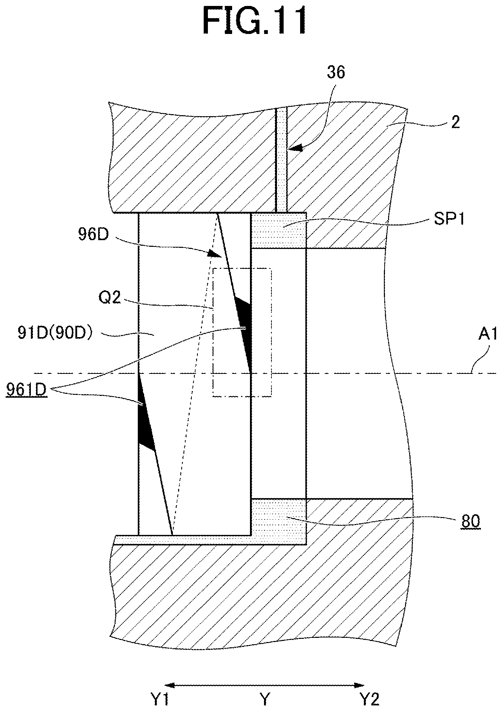

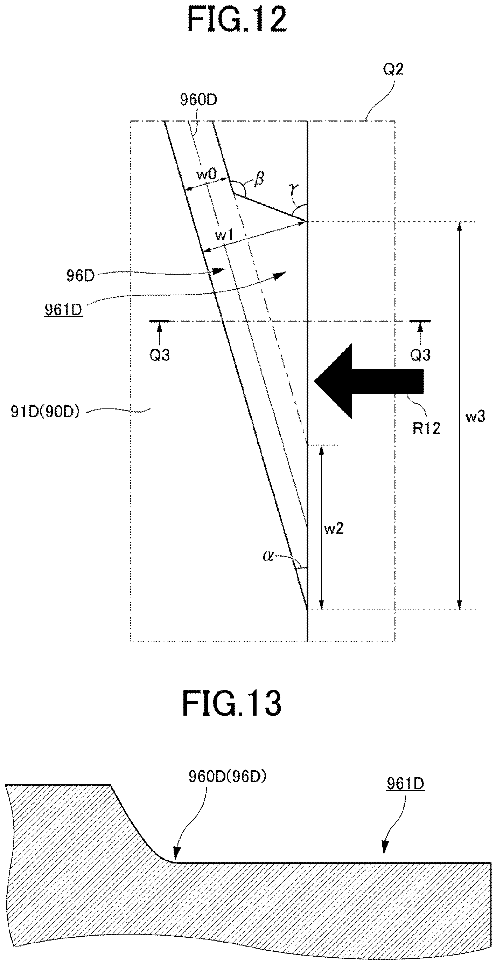

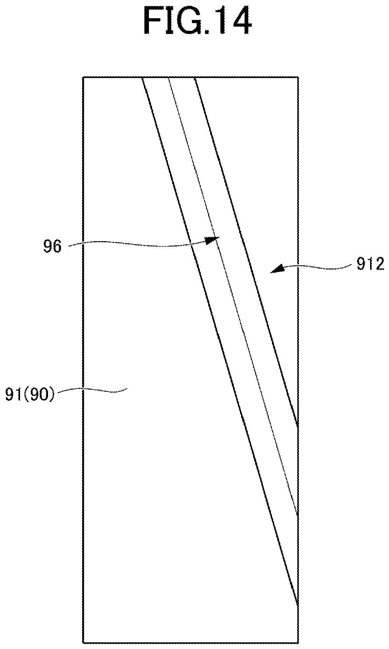

FIG. 11 is an explanatory diagram of a groove 96D formed on the outer peripheral surface of an outer race 91D of a bearing 90D according to a third modification, and is a diagram in a side view similar to that of FIG. 3 (viewed in the X direction from the X2 side). FIG. 12 is an enlarged view of a portion Q2 in FIG. 11. FIG. 13 is a sectional view taken along line Q3-Q3 in FIG. 12. FIG. 14 is a diagram corresponding to FIG. 12 in a case of a configuration without an oil reservoir 961D.

In the example shown in FIGS. 11 to 13, the width of the groove 96D in a direction perpendicular to the longitudinal direction increases at both axial ends. In FIG. 11, a portion of the groove 96D on the near side is shown in black.

Specifically, as schematically shown in FIG. 12, the width of the groove 96D in the direction perpendicular to the longitudinal direction is a width w0 in a normal section, and is a significantly larger width w1 than the width w0 at the end. As a result, the groove 96D has an opening width w3 (= w1 / sinα) that is significantly larger than an opening width w2 (= w0 / sinα) in a case where the groove 96D is open with the width w0.

According to the example shown in FIGS. 11 to 13, the groove 96D has the relatively large opening width w3. Therefore, the oil reservoir 961D having a relatively large capacity can be formed at the end. Thus, the oil can efficiently be supplied into the groove 96D (see arrow R12 in FIG. 12), and the oil transport function of the groove 96D can be enhanced efficiently.

According to the example shown in FIGS. 11 to 13, the portion of the end of the outer race 91D that is adjacent to the groove 96D can function as the oil reservoir 961D. Therefore, it is possible to reduce wear on the case 2 side that may occur when the oil reservoir 961D is not provided.

Specifically, as shown in FIG. 14, when the oil reservoir 961D is not provided, a portion 912 of the axial end of the outer race 91D that is adjacent to the groove 96 is tapered at the circumferential end. Therefore, a relatively high surface pressure may be applied to the case 2 in contact with the portion 912. Such a relatively high surface pressure may accelerate the wear of the case 2.

In this respect, according to the present embodiment, the oil reservoir 961D that is not in contact with the case 2 is formed in place of the portion 912 as described above. For example, the oil reservoir 961D may be formed by cutting the portion 912. Thus, it is possible to prevent a relatively high surface pressure from being applied to the case 2. As a result, the wear on the case 2 side caused by the axial end of the outer race 91D can be reduced effectively.

In the example shown in FIGS. 11 to 13, a bottom 960D of the groove 96D is the bottom 960A described above with reference to FIG. 4 except for the section where the oil reservoir 961D is formed, but may be the bottom 960B, 960C.

In the example shown in FIGS. 11 to 13, the oil reservoirs 961D are formed at both axial ends of one groove 96D, but the oil reservoir 961D may be formed only at one end (e.g., the end on the Y2 side).

In the example shown in FIGS. 11 to 13, the change from the width w0 to the width w1 in the groove 96D is realized in a gradual manner, but may be realized in a stepwise manner. That is, an angle β shown in FIG. 12 may be about 90 degrees. The corner related to the angle β shown in FIG. 12 may be rounded. Similarly, the corner related to an angle γ shown in FIG. 12 may be rounded.

In the example shown in FIGS. 11 to 13, one groove 96D is formed, but a plurality of similar grooves 96D may be formed as described above with reference to FIG. 10. Even in the case where the plurality of similar grooves 96D is formed, an oil reservoir like the oil reservoir 961D described above with reference to FIGS. 11 to 13 may be formed. In the case where the plurality of grooves 96D is formed, the oil reservoir may be formed for each of the plurality of grooves 96D or may be formed in common for part or all of two or more of the plurality of grooves 96D.

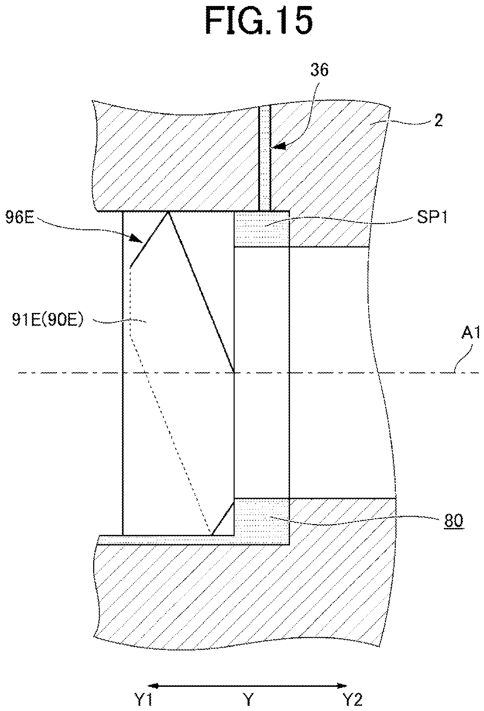

FIG. 15 is an explanatory diagram of a groove 96E formed on the outer peripheral surface of an outer race 91E of a bearing 90E according to a fourth modification, and is a diagram in a side view similar to that of FIG. 3 (viewed in the X direction from the X2 side).

The groove 96E according to the present modification differs from the groove 96 according to the embodiment described above in that it is open only on one axial end side (Y2 side). Specifically, the groove 96E extends in the axial direction and in the circumferential direction about the axis, but returns to the Y2 side without being open in the axial direction at the end face of the outer race 91E on the Y1 side, and is open in the axial direction at the end face of the outer race 91E on the Y2 side.

Even in such a modification, the wear of the case 2 can effectively be reduced as in the embodiment described above though the oil cannot efficiently be transported to the Y1 side via the groove 96E. The groove 96E according to the present modification extends from the opening (inlet) on the Y2 side to the Y1 side and then returns to the Y2 side to open, thereby forming a loop once. However, the groove 96E may extend to form loops twice or more. A plurality of grooves 96E may be formed in such a manner that a plurality of sets of inlets and outlets is formed on the Y2 side. In the present modification as well, an oil reservoir like the oil reservoir 961D described above with reference to FIGS. 11 to 13 may be formed. In the case where the plurality of grooves 96E is formed, the oil reservoir may be formed for each of the plurality of grooves 96E or may be formed in common for part or all of two or more of the plurality of grooves 96E.

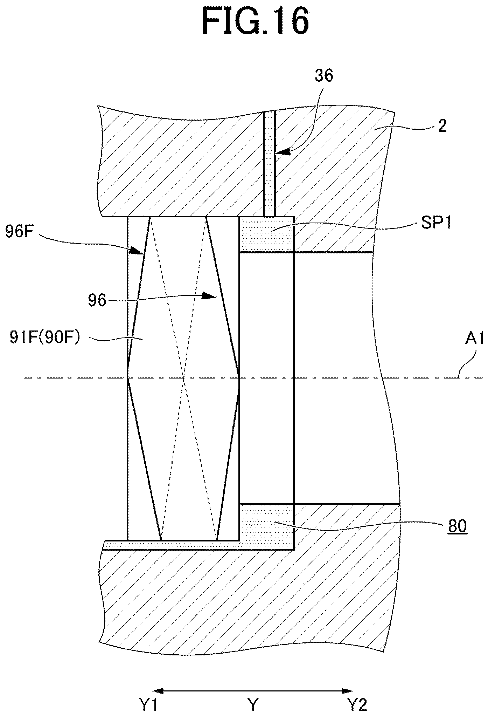

FIG. 16 is an explanatory diagram of a groove 96F formed on the outer peripheral surface of an outer race 91F of a bearing 90F according to a fifth modification, and is a diagram in a side view similar to that of FIG. 3 (viewed in the X direction from the X2 side).

The outer race 91F according to the present modification differs from the outer race 91 according to the embodiment described above in that the groove 96F is added.

Oil can be transported through the groove 96F in a direction opposite to that of the groove 96. Specifically, the oil can be sent from the Y1 side to the Y2 side through the groove 96F when the input shaft 31 rotates in the rotation direction in conjunction with forward movement of the vehicle.

Even with such a modification, the same effects as in the embodiment described above can be obtained. A plurality of grooves 96F according to the present modification may be formed as described above with reference to FIG. 10. In the present modification as well, an oil reservoir like the oil reservoir 961D described above with reference to FIGS. 11 to 13 may be formed. In the case where the plurality of grooves 96F is formed, the oil reservoir may be formed for each of the plurality of grooves 96F or may be formed in common for part or all of two or more of the plurality of grooves 96F.

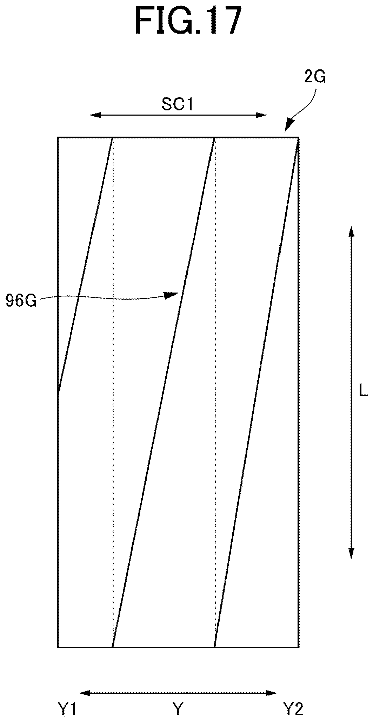

FIG. 17 is an explanatory diagram of a groove 96G formed on the inner peripheral surface (surface that faces the outer race 91 in the radial direction) of a case 2G according to a sixth modification, and is a schematic plan view of the developed inner peripheral surface of the case 2G. An L direction shown in FIG. 17 corresponds to the circumferential direction. Although FIG. 17 shows explanatory dashed lines representing the connection of the groove 96G, the dashed lines are not lines representing the groove 96G itself. A range SC1 shown in FIG. 17 schematically shows an axial range in which the bearing 90 extends.

In the present modification, the groove 96G has a shape of a single helix and is formed in the axial range in which the bearing 90 extends (see the range SC1). That is, the helical groove 96G faces the outer race 91 of the bearing 90 over the entire axial length of the outer race 91. In FIG. 17, the groove 96G extends beyond the bearing 90 on both axial sides of the bearing 90, and is therefore open on both the axial sides of the bearing 90. Also in the present modification, when the bearing 90 rotates along with the rotation of the input shaft 31 as described above with reference to FIG. 6 (see S400), the outer race 91 rotates relative to the case 2G. At this time, the oil in the groove 96G flows in the axial direction along the helical groove 96G by the friction between the outer race 91 and the oil in the groove 96G. Such an axial oil flow is also facilitated by a relatively high oil viscosity.

Even with the present modification, the same effects as in the embodiment described above are obtained. That is, as described above, the oil passing through the groove 96G can reduce the coefficient of friction (coefficient of friction between the case 2G and the outer race 91). Therefore, the relationship of torque T1 > torque T2 is easily maintained even in the low rotation range as described above with reference to FIG. 9. Thus, according to the present modification as well, the wear of the case 2G can effectively be reduced by maintaining the relationship of torque T1 > torque T2 with the oil passing through the groove 96G.

Also in the present modification, the helix direction of the groove 96G may be set such that the oil in the space SP1 (see FIG. 3) is sent to the Y1 side when the input shaft 31 rotates in the rotation direction in conjunction with forward movement of the vehicle. With the axial oil flow through the groove 96G, the coefficient of friction between the outer race 91 of the bearing 90 and the case 2G can be reduced effectively.

Although the present modification relates to the case 2G that may be used together with the bearing 90 having the groove 96 described above, the case 2G can also be suitably combined with a bearing without the groove 96 described above. That is, in the present modification, the groove 96 in the bearing 90 may be omitted.

In the present modification, the groove 96G extends beyond the bearing 90 on both the axial sides of the bearing 90 to open on both the axial sides of the bearing 90, but the groove 96G is not limited thereto. That is, the groove 96G may be formed to open only on the Y2 side in the same concept as that of the groove 96E described above with reference to FIG. 15.

Although the embodiments are described in detail above, the present disclosure is not limited to the specific embodiments, and various modifications and changes can be made within the scope of the claims. It is also possible to combine all or some of the constituent elements according to the embodiments described above.

For example, in the embodiment described above (and the other modifications as well; the same applies hereinafter), the outer race 91 is fitted to the case 2 with a clearance, but the present disclosure is not limited to this. That is, the outer race 91 is fitted to the stationary member with a clearance in the embodiment described above, but the inner race 92 may be fitted to the stationary member with a clearance. In this case, a groove similar to the groove 96 described above may be formed on the inner peripheral surface of the inner race 92 (surface that faces the stationary member in the radial direction).

In the embodiment described above, the outer race 91 is fitted to the case 2 with a clearance, but the present disclosure is not limited to this. For example, the outer race 91 may be fitted to the case 2 by transition fit or interference fit. In this case as well, the wear of the case 2 can be reduced by forming the similar groove 96 in the outer race 91.

Although the embodiment described above is applied to the vehicle drive device that drives the wheels, it can also be applied to a vehicle drive device that transmits a driving force to an on-vehicle component other than wheels, or a drive device for purposes other than a vehicle. For example, the embodiment described above may be applied to a bearing structure related to a rotary member that is drivingly connected to an actuator in a variable valve timing mechanism or an electric oil pump. As described above, the embodiment described above is applicable to any power transmission mechanism, and may be applied to an AMT (Automated Manual Transmission).

### Description of the Reference Numerals

17 ... vehicle drive device (drive device), 2 ... case (stationary member), 90, 90A-90F ... bearing, 31 ... input shaft (rotary member), 96, 96A-96G ... groove, 960A, 960B, 960C, 960D ... bottom, 36 ... oil passage, SP1 ... space, L800, L801 ... virtual line, W ... wheel

## Claims

1. A drive device comprising:
a stationary member;
a bearing; and
a rotary member drivingly connected to a driving source and supported by the stationary member via the bearing so as to be rotatable about an axis, wherein
the rotary member is press-fitted to the bearing and the bearing is fitted to the stationary member,
one or more grooves through which oil passes are formed on a surface of the bearing that faces the stationary member in a radial direction or on a surface of the stationary member that faces the bearing in the radial direction, and
the groove extends in an axial direction and in a circumferential direction about the axis, and is open on at least one side out of both sides of the bearing in the axial direction.

2. The drive device according to claim 1, wherein:
the rotary member is drivingly connected to a wheel so as to transmit power from the driving source to the wheel;
the drive device further includes an oil passage through which oil is supplied to a space that is adjacent from the one side of the bearing in the axial direction;
the groove is open on the one side of the bearing in the axial direction so as to communicate with the space, and is open on the other side of the bearing in the axial direction; and
the groove is formed so as to send the oil supplied to the space from the one side of the bearing to the other side of the bearing in the axial direction when the rotary member rotates in a rotation direction in conjunction with forward movement of a vehicle.

3. The drive device according to claim 1 or 2, wherein the groove has a sectional shape with a rounded bottom.

4. The drive device according to any one of claims 1 to 3, wherein the groove is formed so as to intersect a virtual line parallel to the axial direction on the surface one time or less at each circumferential position about the axis.

5. The drive device according to any one of claims 1 to 4, wherein the groove is formed in the bearing, has a helical shape about an axis extending from one end of the bearing in the axial direction to the other end of the bearing in the axial direction, and is open in the axial direction on both end faces of the bearing in the axial direction.

6. The drive device according to any one of claims 1 to 5, wherein the groove is formed in the bearing, and a groove width in a direction perpendicular to a longitudinal direction increases at an end on the at least one side out of the both sides of the bearing in the axial direction.
